(19) Europäisches Patentamt
European Patent Office
Office européen des brevets

(11) **EP 4 641 159 A1**

(12) **EUROPEAN PATENT APPLICATION**

(43) Date of publication:
**29.10.2025 Bulletin 2025/44**

(21) Application number: 24382428.1

(22) Date of filing: **22.04.2024**

(51) International Patent Classification (IPC):
**G01M 3/32** (2006.01)    **A62C 99/00** (2010.01)

(52) Cooperative Patent Classification (CPC):
**G01M 3/3254; A62C 3/08; A62C 99/0018**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Airbus Operations, S.L.U.
28906 Getafe (Madrid) (ES)**

(72) Inventor: **MARCOS IZQUIERDO, Juan Luis
E-28906 Getafe, Madrid (ES)**

(74) Representative: **ABG Intellectual Property Law,
S.L.
Avenida de Burgos, 16D
Edificio Euromor
28036 Madrid (ES)**

(54) **INERTING SYSTEM FOR AN AIRCRAFT**

(57) The present invention relates to inerting systems and the detection of leaks in said inerting systems. Particularly, the invention relates to a method for detecting air leaks in inerting systems by comparing the nitrogen outlet with the nitrogen inlet in the inerting system.

The invention also relates to an inerting system that is able to monitor in real time the nitrogen mass flow in the outlet compared to the nitrogen mass flow in the inlet and react if air leakage is detected. More particularly, the inerting systems are intended for use on aircraft.

FIG. 1

**Description**

## TECHNICAL FIELD OF THE INVENTION

The present invention relates to inerting systems and the detection of leaks in said inerting systems. Particularly, the invention relates to a method for detecting air leaks in inerting systems by comparing the nitrogen outlet with the nitrogen inlet in the inerting system. The invention also relates to an inerting system that is able to monitor in real time the nitrogen mass flow in the outlet compared to the nitrogen mass flow in the inlet and react if air leakage is detected. More particularly, the inerting systems are intended for use on aircraft.

## BACKGROUND OF THE INVENTION

It is well-known to those skilled in the art to inert explosive or flammable atmospheres on-board an aircraft with inert gas (such as nitrogen), such as for example fuel tanks or fuel cells, by providing inert gas to the inside of the casings housing the hydrogen-based systems. Hydrogen is a gas with a very high permeability. This makes it challenging to contain hydrogen gas inside an enclosure. The inerting is performed in order to avoid risks of explosion or flames in casings housing fuel cells. It is common to use nitrogen as inerting gas, the inert gas being provided by nitrogen bottles or nitrogen generation systems. The nitrogen circulates in the fuel cells casing at a nominal rate, determined based on a worst case scenario (i.e. with the maximum nominal case scenario leakages). This sizing is made to ensure that the limits of a flammable mixture of hydrogen and oxygen in volumetric concentration are never reached in this atmosphere. The mix of the atmosphere or fluid inside the fuel tank or fuel cell casing is then expelled to the outside of the aircraft. The concentration of hydrogen and oxygen in this atmosphere is maintained many times below the required safety policy limits.

The injection of inert gas is currently performed as a generic injection of inert gas in the enclosure of the fuel cells. This enclosure could be defined as a "container" or "casing". The term "injector" is used to define the inlet of inert gas (such as nitrogen) in the volume to be inerted. This injection is usually made taking into account a generic position and the capacity to supply the different flows needed. The quantity of inert gas injected is calculated to be able to dissolve a certain quantity of nominal leaks that can occur in such volume.

A common way to measure the volumetric concentration of oxygen inside the casing is providing several sensors scattered on the walls of the casing. Some examples of these sensors are optical sensor, zirconium sensor, amperometric sensor or laser. The optical sensor measures the quantity of light rays physically present and turns that information into an electrical signal that can be interpreted by a person or an electronic instrument. These current sensors has a range of working condition until 50°C. The zirconium sensor has the disadvantage that it needs to heat up to measure the O2 until 700°C. This is not compatible with current temperature requirements of hydrogen-based systems as the autoignition temperature of hydrogen is 550°C, and neither with the presence of hydrogen in the atmosphere as it falsifies the measure of 02. The amperometric sensor is not quick enough and is not compliant regarding temperatures since it stops working at 60°C. The laser sensors available at the moment are very large and each sensor could weigh more than 15 kg, which is not acceptable in the aeronautic industry.

These sensors are not compatible with hydrogen-based systems or they no accomplish the temperature range or the time response of sensors.

The more critical interface of hydrogen-based system is the atmosphere surrounding the system. Inside the casing of a hydrogen-based system, there are equipment that contains air and hydrogen separately. This is the most critical system where it is needed to monitor small-medium leaks of air that could build up the oxygen concentration above a predefined volumetric concentration.

The present invention seeks to solve the problems mentioned above and others by nitrogen mass flow measuring and ensuring that the oxygen volumetric concentration and the hydrogen volumetric concentration remain below predefined thresholds.

## SUMMARY OF THE INVENTION

The present invention provides a method for detecting air leaks according to claim 1, an inerting system according to claim 10 and an aircraft according to claim 15. In dependent claims, preferred embodiments of the invention are defined.

In a first inventive aspect, the present invention provides a method for detecting air leaks in an inerting system,

the inerting system comprising a casing at least partially housing a hydrogen system and comprising an inlet and an outlet, and
the inerting system being provided with a predefined volumetric flow of hydrogen leak and a predefined volumetric flow of air leak at a predefined conditions of pressure and temperature of the hydrogen system;
the method comprising the following steps:

(a) measuring a nitrogen mass flow entering to the casing through the inlet by an inlet mass meter,
(b) measuring a nitrogen mass flow leaving the casing through the outlet by an outlet mass meter, and
(c) comparing the nitrogen mass flow leaving the casing with the nitrogen mass flow entering the casing so that if the difference between the nitrogen mass flow leaving the casing and the nitrogen mass flow entering the casing is greater than a first threshold, it is detected that there is an air leak inside the casing that build up a predefined oxygen volumetric concentration;

wherein

the first threshold is X% of a nitrogen volumetric flow needed to be supplied to the inside of the casing for keeping inside the casing with at most a predefined hydrogen volumetric concentration and/or at most the predefined oxygen volumetric concentration, and
X is a predefined value provided by a performance of the inlet mass meter (3) and outlet mass meter (4).

The present method is intended to detect air leaks in an inerting system provided for inerting hydrogen systems (or hydrogen-based systems) such as fuel tanks or fuel cells wherein the fuel is hydrogen. The inerting system will be suitable for inerting any enclosure that has a relatively small free volume and that needs to be inerted. In an embodiment, the hydrogen system is a fuel tank, a fuel cell system or any other system that could be encapsulated and contains hydrogen. In an embodiment, the inerting system is intended for use on aircraft.

The inerting system comprises a casing that at least partially houses or encloses a hydrogen system. Casing means an enclosure which houses a hydrogen system or part of a hydrogen system. This casing is used to contain a potential leak of hydrogen so that it does not extend outside the casing. The casing comprises an inlet for allowing at least an inert gas to be fed to the casing. Additionally, the casing that is inerted has an outlet or vent line to purge the atmosphere inside the casing. In an embodiment, this vent line connects to the outside of the aircraft.

The hydrogen system such as the fuel cells system needs hydrogen and an air supply (containing oxygen) to work. Inside the casing, where the fuel cell is installed, are placed air supply pipes and hydrogen supply pipes. These pipes and the union interfaces of pipes and equipment have nominal leakages and the inerting system is sized taking into consideration the worst-case scenario of nominal leakages. The connectors of these hydrogen supply pipes and the fuel cells are the main sources of the leakages.

The present method is intended to measure if an air leak happens inside the casing that builds up a concentration of oxygen. A mass balance between the nitrogen inlet and the nitrogen outlet detects the presence of air leaks inside the casing. As the hydrogen systems have nominal leaks of hydrogen and air due to the way they intrinsic design, a continuous flow of nitrogen shall be given to the atmosphere to not allow the inerting system to overpass the mentioned predefined volumetric concentration of hydrogen and the predefined volumetric concentration oxygen.

Each inerting system is provided with a worst case scenario hydrogen leak in nominal conditions and a worst case scenario air leak in nominal conditions at a predefined pressure and temperature conditions in the casing. Specifically, inside the casing, oxygen shall not overpass a predefined oxygen volumetric concentration and hydrogen shall not overpass a predefined hydrogen volumetric concentration.

For carrying out the present method, first it is provided the flow of gaseous hydrogen that leaks from the hydrogen system that contains hydrogen and the flow of air that leaks from the hydrogen system that contains air. These volumetric flows of hydrogen leak and air leak are provided according to the hydrogen system and its pressure and temperature conditions. That is, each specific hydrogen system has nominal leaks of hydrogen and air due to the way the hydrogen system intrinsic design. From the flow of air it is known that the air is composed, approximately, by 21% of oxygen and by 79% of nitrogen in volumetric concentration. Therefore, for a given air flow, it is possible to determine the volumetric concentration of oxygen and the volumetric concentration of nitrogen present in such given air flow. It is also known that the ration between the leaks of hydrogen and air by an equal leak surface is 3.9.

The method measures respectively in steps (a) and (b) the nitrogen mass flow that enters into the casing through the inlet and the nitrogen mass flow that leaves the casing through the outlet. These measures are carried out by an inlet mass meter and an outlet mass meter respectively.

Once the nitrogen mass flow inlet and outlet have been measured, then the method compares in step (c) such measures. If the difference between the nitrogen mass flow outlet and the nitrogen mass flow inlet is greater than a first threshold, it is determined there is an air leak inside the casing that build up a predefined oxygen volumetric concentration. The difference between the nitrogen outlet and the nitrogen inlet is an indicative of a nitrogen leak that occurs inside the casing due to the hydrogen system. In other words, the mass flow difference corresponds to a nitrogen leak that occurs inside the casing.

The first threshold corresponds to an X value (expressed in %) of the nitrogen volumetric flow that is needed to be supplied inside the casing to prevent the volumetric concentrations of hydrogen and oxygen respectively from exceeding a predefined value. The X value is a predefined value already provided by the performance of the means in charge of measuring the nitrogen inlet and the nitrogen outlet. In an embodiment, X is 5.

The indices (a) to (c) of the present method do not limit the order of execution of the stages of said method.

Advantageously, the present method allows detecting local accumulation of hydrogen and/or oxygen surrounding hydrogen systems, and thus reducing the possibilities of creating a flammable fluid inside the casing where the hydrogen system is placed. Therefore, the present method has a greater leak detection range than state-of-the-art solutions.

Thus, the present method allows to limit the local build-up of oxygen and/or hydrogen by detecting air leaks inside the casing as quickly as possible. That is, the present method provides rapid detection of air leaks that may be indicative of risk to the inside of the casing. For example, if a mixture of oxygen and hydrogen with enough volumetric concentration of these gases in the fluid of the casing happens, there are higher risks of a fire to be triggered. For this reason, the present invention allows for improved and more accurate air leakage detection and allows taking action accordingly.

In an embodiment, step (a) is performed by an inlet mass meter arranged at the inlet of the casing and step (b) is performed by an outlet mass meter arranged at the outlet of the casing. For carrying out the nitrogen measuring, there is a mass meter at the inlet of the casing for measuring the nitrogen inlet and a mass meter at the outlet of the casing for measuring the nitrogen outlet.

In an embodiment, the predefined hydrogen volumetric concentration ($C_H$) is 4%.

In an embodiment, the predefined oxygen volumetric concentration ($C_O$) is 4%.

The above predefined volumetric concentrations of hydrogen and oxygen advantageously ensure that the creation of air inside the casing would not be sufficient to create a flammable fluid.

In an embodiment, the nitrogen volumetric flow needed to be supplied to the inside of the casing for keeping inside the casing with at most a predefined hydrogen volumetric concentration and/or at most the predefined oxygen volumetric concentration, is determined as

$$Q_N = \frac{L_H^I}{C_H}$$

. This nitrogen volumetric flow $Q_N$ needed is equal to the predefined volumetric flow of hydrogen leak divided by the predefined hydrogen volumetric concentration.

In an embodiment,

when it is detected an air leak greater than the predefined volumetric flow of air leak and lower than an air leak needed to create a volumetric concentration of oxygen above the predefined oxygen volumetric concentration, and this air leak leads to a nitrogen leak inside the casing above X% of $Q_N$, it is determined that the air leak detected will not create a flammable atmosphere inside the casing; or

when it is detected an air leak greater than an air leak needed to create a volumetric concentration of oxygen above the predefined oxygen volumetric concentration, it is determined that the air leak detected will create an oxygen concentration that in combination with a predefined concentration of hydroden, can create a flammable atmosphere inside the casing;

wherein

the nitrogen leak that occurs inside the casing corresponds to the difference (in volumetric flow) between the nitrogen mass flow leaving the casing and the nitrogen mass flow entering the casing; and

the air leak needed to create a volumetric concentration of oxygen above the predefined oxygen volumetric concentration is determined as follows:

$$\frac{0.21 \times L_A}{Q_N} \times \frac{1}{C_O} > 1$$

.

Advantageously, the method is able to determine that with an air leak there is sufficient oxygen in an area so that if a hydrogen leak occurs, a flammable atmosphere can be created inside the casing.

According to the previous embodiment, $Q_N$ is the nitrogen volumetric flow needed to be supplied to the inside of the casing for keeping inside the casing with at most a predefined hydrogen volumetric concentration and/or at most the predefined oxygen volumetric concentration.

In an embodiment, if the nitrogen mass flow leaving the casing is lower than the nitrogen mass flow entering the casing, it is detected that the casing is leaking outwards. If the nitrogen mass flow that comes out is less than the nitrogen mass flow that is supplied inside the casing, it is determined that there is a leak in the casing itself or in the hydrogen system outside the casing.

In an embodiment, if an air leak is detected in the step (c), the method further comprises:

i. stopping the operation of the hydrogen system and/or
ii. increasing the mass flow of nitrogen to be supplied inside of the casing.

Advantageously, the present method is also able to configure the operation of the hydrogen system and the supply of nitrogen inside the casing according to the detection performed. For example, if the air leak detected would create a flammable atmosphere inside the casing, the mass flow of nitrogen to be supplied into the casing is increased in order to reduce the oxygen volumetric concentration until be lower than the predefined oxygen volumetric concentration. In other example, if the air leak detected would create a flammable atmosphere quickly the operation of the hydrogen system is stopped to eliminate the risk of the atmosphere to be flammable. In addition, if the method detects that the casing is leaking out the hydrogen system operation is stopped in order to avoid hydrogen leakage with extra failure from inside the casing to the outside of the casing.

In an embodiment, the method is intended for detecting air leaks in the inerting system of the second inventive aspect disclosed below.

In a second inventive aspect the invention provides an inerting system comprising:

- a casing at least partially housing a hydrogen system and comprising an inlet and an outlet,
- inert gas supplying means configured to supply nitrogen to the inside of the casing through the inlet,
- an inlet mass meter arranged at the inlet of the casing and configured to measure a nitrogen mass flow entering the casing,
- an outlet mass meter arranged at the outlet of the casing and configured to measure a nitrogen mass flow leaving the casing; and
- control means in data communication with the inlet mass meter and the outlet mass meter;

wherein

the inerting system is provided with a predefined volumetric flow of hydrogen leak and a predefined volumetric flow of air leak at a predefined conditions of pressure and temperature of the hydrogen system;

the inerting system is configured to supply to the inside of the casing a nitrogen volumetric flow for keeping inside the casing with at most a predefined hydrogen volumetric concentration and/or at most a predefined oxygen volumetric concentration; and

the control means are configured for detecting at least an air leak inside the casing by comparing, the difference between the nitrogen mass flow leaving the casing and the nitrogen mass flow entering the casing, with a first threshold; and

the first threshold is X% of the nitrogen volumetric flow X being a predefined value provided by the performance of the inlet mass meter and outlet mass meter.

The present inerting system provides a nitrogen inlet mass meter for measuring the nitrogen inlet in the casing and a nitrogen outlet mass meter for measuring the nitrogen outlet from the casing. The inlet mass meter is located on the inlet of the casing and the outlet mass meter is located on the outlet of the casing.

The inerting system also comprises control means connected to the inlet mass meter and outlet mass meter so that according to the data provided by these mass meters and further data from the inerting system, the control means detects air leaks inside the casing. The data provided from the inerting system is a predefined volumetric flow of hydrogen leak and a predefined volumetric flow of air leak at a predefined conditions of pressure and temperature of the present inerting system.

According to the this data provided from the inerting system and with the aim to keep inside the casing with at most a predefined hydrogen volumetric concentration and/or at most a predefined oxygen volumetric concentration, the inerting system is able to supply to the inside of the casing a specific nitrogen mass flow. The control of this nitrogen mass flow supply is carried out by the control means and the inert gas supplying means.

The control means are able to detect air leaks by comparing the difference between the outlet of nitrogen from the casing and the inlet of nitrogen with a first threshold. This first threshold as already described above is an X value (expressed in %) of the volumetric flow of nitrogen wherein X is a predefined value provided by the performance of the mass meters.

Advantageously, the present inerting system allows detecting local accumulation of hydrogen and/or oxygen surrounding itself, and thus reducing the possibilities of creating a flammable fluid inside the casing. Therefore, the present system provides a greater leak detection range than state-of-the-art solutions.

In an embodiment, the inerting system further comprises:

- inlet valve configured to regulate the passage of a flow of nitrogen inside of the casing; and
- an outlet valve configured to regulate an outlet flow of fluid located inside the casing through the outlet;

wherein the control means are configured to independently control the operation of the inlet valve and the outlet valve.

In an embodiment, the control means are configured to control the operation of the inlet valve and/or the outlet valve when the difference between the nitrogen mass flow leaving the casing and the nitrogen mass flow entering the casing is greater than the first threshold. In this case, when the control means determines that said difference of nitrogen flow mass is above the first threshold, the control means operates the inlet valve and the outlet valve. So that these valves are opened as much as possible to recirculate out the fluid contained in the casing and that the new mass flow of nitrogen entering is sufficient to keep the inside of the casing with the volumetric concentrations of oxygen and hydrogen below the predefined values already mentioned above.

Therefore, the present inerting system advantageously has the capacity to regulate the operation of itself depending on the information provided by the nitrogen mass flow meter and the air leaks detection.

In an embodiment, the hydrogen system is a plurality of fuel cells or a combustion engine.

According to the embodiment of a plurality of fuel cells, there is a set of fuel cells stacked next to each other in a longitudinal direction with a free space between each two fuel cells, i.e. the fuel cells are arranged horizontally, stacked one over the other along the longitudinal direction, with a free space between each two consecutive fuel cells. The longitudinal direction corresponds to the stacking direction of the fuel cells inside the casing. When the present inerting system is on-board the aircraft, the longitudinal direction is substantially parallel to the vertical direction of the aircraft. This vertical direction of the aircraft is orthogonal to the horizontal plane containing the longitudinal direction of the aircraft. According to this longitudinal direction or stacking direction of the fuel cells, the casing comprises a bottom or lower surface, a top or upper surface and a plurality of lateral walls or lateral surfaces enclosing such lower and upper surfaces. For the present invention, relative terms such as "upper, lower, lateral, above, over etc." are referred with respect to the longitudinal direction or stacking direction of the fuel cells. The casing comprises a bottom, a top and a plurality of lateral walls, wherein each lateral wall extends from the bottom to the top in the longitudinal direction. That is, the bottom is connected to the top through the lateral walls.

In an embodiment, the set of fuel cells is provided inside the casing keeping a free space between each fuel cell and any of the bottom, top and lateral walls of the casing. In this sense, inside the casing there are free spaces between fuel cells and between the fuel cells and the surfaces of the casing, i.e. free space between fuel cells and any of the following: bottom, top and lateral walls of the casing.

In an embodiment, the fuel cell system comprises a balance of plant arranged partially inside the casing and separated from the fuel cells. There is also a free space surrounding the balance of plant. The balance of plant is understood as the systems for regulating flows of hydrogen and air before being injected at their reaction sites in the fuel cells.

In an embodiment, the outlet of the casing is arranged over the stack of fuel cells according to the longitudinal direction, i.e. the outlet is far away from the stack of fuel cells. In this sense, the outlet is at a distance from the bottom of the casing that is greater than the distance between the bottom and the last fuel cells of the stack furthest from the bottom. In an embodiment, the stack of fuel cells is arranged inside the casing closer to the bottom of the casing. In an embodiment, the outlet is at the top of the casing to take advantage of the fact that hydrogen is a lighter gas and will tend to go to the top of the casing naturally.

In an embodiment, the inlet of the casing is adapted in relation to its position, shape, direction, etc. to obtain as turbulent a flow as possible inside the casing in order to avoid local oxygen and hydrogen accumulation.

In an embodiment, the inerting system further comprises sensing means configured to measure the volumetric concentration of oxygen and the volumetric concentration of hydrogen of the fluid located inside the casing. This sensing means are in data communication with the control means.

## DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.

Figure 1    This figure shows a schematic view of an inerting system according to an embodiment of the present invention.

Figure 2    This figure shows a schematic view of an inerting system according to another embodiment of the present invention.

Figure 3    This figure shows a schematic view of an aircraft with an inerting system according to the present invention.

## DETAILED DESCRIPTION OF THE INVENTION

### Inerting system

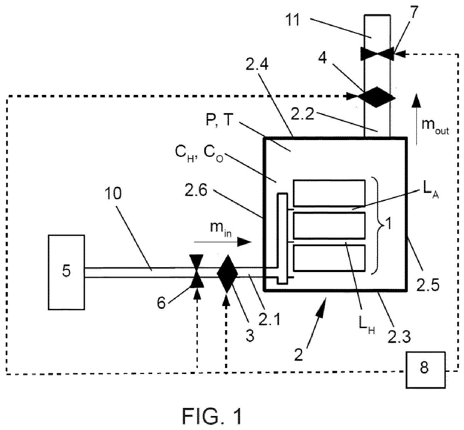

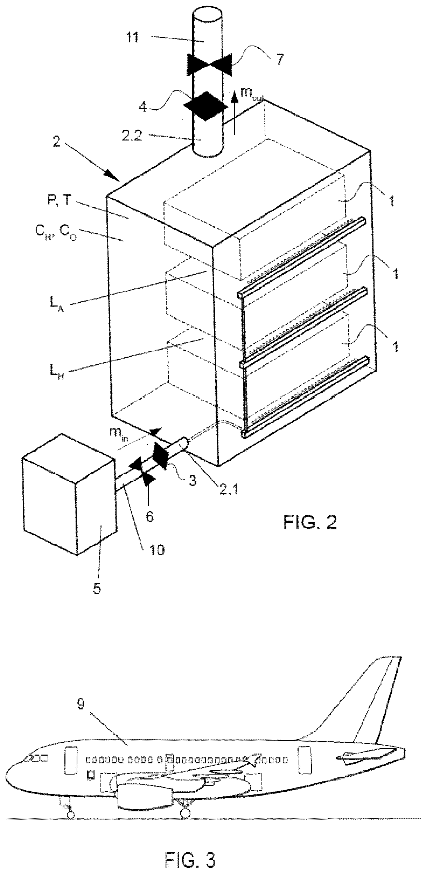

Figures 1 and 2 show an inerting system suitable for inerting a hydrogen fuel cell system housed in a casing (2). This inerting system is configured to be installed in an aircraft (9). Specifically, figure 3 shows an aircraft (9) suitable for comprising any of the inerting systems shown in figures 1 and 2.

For the embodiments shown in figures 1 to 2, there is a casing (2) that houses inside a fuel cell system or a part of the same. This fuel cell system comprises three fuel cells (1) arranged horizontally one stacked on top of the other according to a longitudinal direction. Specifically, figure 1 shows the casing (2) comprising (according to longitudinal direction) a bottom (2.3), a top (2.4) and at least a first lateral wall (2.5) and a second lateral wall (2.6), each lateral wall (2.5, 2.6) in contact with both the bottom (2.3) and the top (2.4).

The inerting system shown in figures 1 and 2 has a predefined volumetric flow of hydrogen leak ($L_H'$) and a predefined volumetric flow of air leak ($L_A'$) at predefined conditions of pressure (P) and temperature (T). In addition, for keeping inside the casing (2) with at most a predefined hydrogen volumetric concentration ($C_H$) and/or at most a predefined oxygen volumetric concentration (Co), the inerting system supplies to the inside of the casing (2) a specific nitrogen volumetric flow ($Q_N$).

Figures 1 and 2 show that inside the casing (2) there is a free space between each two fuel cells (1), i.e. between two consecutive fuel cells (1), and between the fuel cell (1) closest to the bottom (2.3) of the casing (2) and the bottom (2.3) of the casing (2).

The casing (2) also comprises an inlet (2.1) and an outlet (2.2) which allow a fluid flow through the casing (2). The inlet (2.1) is connected to an inlet channel (10) and the outlet (2.2) is connected to an exhaust channel (11). The inlet channel (10) is in turn connected with inert gas supplying means (5) adapted for supplying nitrogen for inerting the inside of the casing (2). On the other hand, the outlet (2.2) is configured to be connected to the outside of the aircraft (9). The flow inlet of fluid through the inlet (2.1) corresponds to the nitrogen mass flow entering the casing (2) or $m_{in}$. The outlet flow of the fluid through the outlet (2.2) corresponds to the nitrogen mass flow going outside the aircraft (9) and not coming back or $m_{out}$.

The inerting system shown in figures 1 and 2 further shows an inlet mass meter (3) located on the inlet (2.1) of the casing (2) for measuring $m_{in}$, and an outlet mass meter (4) located at the outlet (2.2) of the casing (2) for measuring $m_{out}$. Furthermore, these figures show an inlet valve (6) interposed on the inlet channel (10) for regulating the flow of nitrogen that is supplied by the inert gas supplying means (5) to the inside of the casing (2). This flow inlet of nitrogen through to the inlet channel (10) corresponds to the nitrogen mass flow entering the casing (2) or $m_{in}$ that is the mass flow coming from the inert gas supplying means (5). In addition, there is an outlet valve (7) interposed on the exhaust channel (11) for regulating the outlet flow of fluid coming from the inside of the casing (2) through the outlet (2.2).

Furthermore, the inerting system also comprises control means (8) in data communication with the inlet mass meter (3) and the outlet mass meter (4). These control means (8) independently control at least the inlet valve (6) and the outlet valve (7) according to the determination of the control means (8) based on the data from the mass meters (6, 7). Specifically, the control means (8) are configured to detect air leaks ($L_A$) inside the casing (2) by comparing, the difference between $m_{out}$ and $m_{in}$ with a first threshold. This first threshold is X% of the nitrogen volumetric flow ($Q_N$), and X is a predefined value provided by the performance of the inlet mass meter (3) and outlet mass meter (4).

*Method for detecting air leaks*

The present invention further provides a method for detecting air leaks in an inerting systems of aircraft (9). An example of a method for detecting air leaks in an inerting system is explained below; wherein the method is carried out in any of the inerting systems described above regarding figures 1 and 2 respectively.

For the present method and according to the pressure (P) and temperature (T) of the hydrogen system, it is firstly provided:

- the volumetric flow of gaseous hydrogen that leaks from the fuel cells (1) or other interface that contains hydrogen, i.e., the predefined volumetric flow of hydrogen leak ($L_H$'); and
- the volumetric flow of air that leaks from the fuel cells (1) or other interface that contains air, i.e., the predefined volumetric flow of air leak ($L_A$').

The temperature (T), pressure (P) and the predefined volumetric flows of hydrogen leak ($L_H$') and air leak ($L_A$') of the inerting system are predefined values according to the specific configuration of the inerting system.

It is also known that predefined volumetric flow of air leak ($L_A$') is composed approximately 21% by oxygen and 79% by nitrogen in volumetric concentration. In addition, it is also known that for inerting systems there is a ratio of 3.9 between hydrogen leaks ($L_H$') and air leaks ($L_A$') by an equal leak surface. From this known ratio, it can be determined that the ratio between hydrogen leaks ($L_H$') and oxygen leaks ($L_O$') is 3.9/0.21 = 18.57.

According to the predefined volumetric flow of hydrogen leak ($L_H$') and a predefined volumetric flow of air leak ($L_A$') provided by the inerting system, the method comprises determining the needed nitrogen volumetric flow ($Q_N$) for ensuring that the hydrogen volumetric concentration ($C_H$) is not higher than 4% and/or the nitrogen volumetric concentration ($C_N$) is not higher than 4%. Therefore, the needed nitrogen volumetric flow ($Q_N$) is calculated as $Q_N = L_H'/0.04$ or $Q_N = 25 \times L_H'$.

Once $Q_N$ is calculated, then the casing (2) can be inerted by supplying the mass flow of nitrogen correspond to such nitrogen volumetric flow $Q_N$ to the inside of the casing.

In step (a), the method measures by the inlet mass meter (3) the nitrogen mass flow ($m_{in}$) that enters to the casing (2) through the inlet (2.1). The nitrogen inlet $m_{in}$ must correspond to the already calculated $Q_N$.

In step (b), the method measures by the outlet mass meter (4) the nitrogen mass flow ($m_{out}$) that leaves the casing (2) through the outlet (2.2).

According to this example, the mass meters (3, 4) have a performance of 5% regarding the sensibility of the measured signal, and this percentage performance is a predefine value provided by the mass meters (3, 4).

The data measured from the mass meters (3, 4) is then provided to the control means (8) to determine the balance i.e., the difference between the nitrogen mass flow ($m_{out}$) leaving the casing (2) and the nitrogen mass flow ($m_{in}$) entering the casing (2). This difference corresponds to the nitrogen leak ($L_N$) that occurs inside the casing (2). That is, in step (c) the method compares such calculated difference between $m_{out}$ and $m_{in}$ (or the nitrogen leak ($L_N$)) with a first threshold. Specifically, this first threshold corresponds to the 5% of $Q_N$, wherein the 5% is the predefined percentage value provided by the performance of the mass meters (3, 4). If a leak of air happens inside the casing (2) this means that a quantity of air will be injected into the casing (2).

If the control means (8) determines in step (c) that the difference between $m_{out}$ and $m_{in}$ is greater than the first threshold (5% of $Q_N$), this means that an air leak ($L_A$) is created inside the casing (2). That is, comparing said difference with the first threshold the method is able to determine if there is an air leak ($L_A$) inside the casing (2) that could build up the predefined oxygen volumetric concentration (Co) of 4%.

Once an air leak ($L_A$) is detected, then the method is further able to determine the type of leakage that has occurred inside the casing (2) and consequently whether it can lead to a flammable atmosphere inside the casing (2).

In a first embodiment, when there is an air leak ($L_A$) greater than the nominal one (the predefined volumetric flow of air leak ($L_A$')) and this air leak ($L_A$) leads to a leak of nitrogen ($L_N$) lower than 5% of $Q_N$, the air leak ($L_A$) will not be detected by the control means (8). In the worst-case scenario, if the nitrogen leak ($L_N$) is 5% of $Q_N$, this means that there is a leak of oxygen (Lo) of 0.05/(0.79(nitrogen/air)) x (0.21(oxygen/air)), that is, Lo= 0.0133 x $Q_N$. As seen above, $Q_N = 25 \times L_H$', and therefore, $L_O = 0.332 \times L_H$'. In this case, even if it is not detected, it will not create a concentration of oxygen necessary to create a flammable mixture with hydrogen.

In a second embodiment, when there is an air leak ($L_A$) greater than the nominal one (the predefined volumetric flow of air leak ($L_A$')) and lower than an air leak ($L_A$") needed to create a volumetric concentration of oxygen above the predefined oxygen volumetric concentration (Co) (wherein Co = 4%), and this air leak ($L_A$) leads to a nitrogen leak ($L_N$) inside the casing (2) above X% of $Q_N$ (that is above 5% of $Q_N$), it will be detected by the control means (8). In this case, the control means (8) determine that the air leak ($L_A$) detected will not create a flammable atmosphere inside the casing (2), that is, it will not create a concentration of oxygen necessary to create a flammable mixture with a predefined concentration of hydrogen.

The volumetric concentration of oxygen (Co) will reach the limit (4%) when the air leak ($L_A$) involves the oxygen leak ($L_O$) being equal to predefined volumetric flow of hydrogen leak ($L_H$'). According to the second embodiment, when the leak of air causes a flow of oxygen that is comprised between $0.332 \times L_H$' and $L_H$', it will be detected by the air leak ($L_A$) but it will not create a flammable atmosphere. For these calculations, the nitrogen leak ($L_N$) is $0.79 \times L_A$, and the oxygen leak ($L_O$) is $0.21 \times L_A$. In addition, it is known that the factor between air leakage and hydrogen leakage for the same leakage surface, is 3.9 times lower for air than for hydrogen.

In a third embodiment, when there is an air leak ($L_A$) greater than the air leak ($L_A$") needed to create a volumetric concentration of oxygen above the predefined oxygen volumetric concentration (Co), the control means (8) determine that the air leak ($L_A$) detected will create a flammable atmosphere inside the casing (2). That is, when there is an air leak greater than the nominal ones that will create a volumetric concentration of oxygen above 4%, this air leak ($L_A$) will be detected and it will determine that this leak of air will create an oxygen concentration that in combination with a predefined concentration of hydrogen, can create a flammable atmosphere inside the casing (2).

Moreover, the air leak ($L_A$") needed to create a volumetric concentration of oxygen above the predefined oxygen volumetric concentration (Co) is determined as follows:

$$\frac{0.21 \times L_A}{Q_N} \times \frac{1}{C_O} > 1$$

, wherein the predefined oxygen volumetric concentration (Co) is 4%.

In any of the second and third embodiment, if an air leak ($L_A$) is detected the method further comprises increasing the mass flow of nitrogen to be supplied inside the casing (2) and/or stopping the operation of the hydrogen system.

In a four embodiment, if the nitrogen mass flow ($m_{out}$) leaving the casing (2) is lower than the nitrogen mass flow ($m_{in}$) entering the casing (2), the control means determines that the casing (2) is leaking outwards. According to this embodiment, the method further comprises stopping the operation of the hydrogen system in order to stop losing nitrogen from the hydrogen system.

**Claims**

1.  Method for detecting air leaks in an inerting system ,

    the inerting system comprising a casing (2) at least partially housing a hydrogen system (1) and comprising an inlet (2.1) and an outlet (2.2), and
    the inerting system being provided with a predefined volumetric flow of hydrogen leak ($L_H$') and a predefined volumetric flow of air leak ($L_A$') at a predefined conditions of pressure (P) and temperature (T) of the hydrogen system;
    the method comprising the following steps:

      (a) measuring a nitrogen mass flow ($m_{in}$) entering to the casing (2) through the inlet (2.1) by an inlet mass meter (3),
      (b) measuring a nitrogen mass flow ($m_{out}$) leaving the casing (2) through the outlet (2.2) by and outlet mass meter (4), and
      (c) comparing the nitrogen mass flow ($m_{out}$) leaving the casing (2) with the nitrogen mass flow ($m_{in}$) entering the casing (2) so that if the difference between the nitrogen mass flow ($m_{out}$) leaving the casing (2) and the nitrogen mass flow ($m_{in}$) entering the casing (2) is greater than a first threshold, it is detected that there is an air leak ($L_A$) inside the casing (2) that build up a predefined oxygen volumetric concentration (Co);

    wherein

      the first threshold is X% of a nitrogen volumetric flow ($Q_N$) needed to be supplied to the inside of the casing (2) for keeping inside the casing (2) with at most a predefined hydrogen volumetric concentration ($C_H$) and/or at most the predefined oxygen volumetric concentration (Co), and

X is a predefined value provided by a performance of the inlet mass meter (3) and outlet mass meter (4).

2. The method according to the previous claim, wherein step (a) is performed by an inlet mass meter (3) arranged at the inlet (2.1) of the casing (2) and step (b) is performed by an outlet mass meter (4) arranged at the outlet (2.2) of the casing (2).

3. The method according to any of the previous claims, wherein the predefined hydrogen volumetric concentration ($C_H$) is 4%.

4. The method according to any of the previous claims, wherein the predefined oxygen volumetric concentration (Co) is 4%.

5. The method according to any of the previous claims, wherein X is 5.

6. The method according to any one of the previous claims, wherein the nitrogen volumetric flow ($Q_N$) needed to be supplied to the inside of the casing (2) for keeping inside the casing (2) with at most a predefined hydrogen volumetric concentration ($C_H$) and/or at most the predefined oxygen volumetric concentration (Co), is determined as

$$Q_N = \frac{L_H'}{C_H}.$$

7. The method according to any one of the previous claims, wherein:

when it is detected an air leak ($L_A$) greater than the predefined volumetric flow of air leak ($L_A'$) and lower than an air leak ($L_A''$) needed to create a volumetric concentration of oxygen above the predefined oxygen volumetric concentration (Co), and this air leak ($L_A$) leads to a nitrogen leak ($L_N$) inside the casing (2) above X% of $Q_N$, it is determined that the air leak ($L_A$) detected will not create a flammable atmosphere inside the casing (2); or

when it is detected an air leak ($L_A$) greater than an air leak ($L_A''$) needed to create a volumetric concentration of oxygen above the predefined oxygen volumetric concentration (Co), it is determined that the air leak ($L_A$) detected will create an oxygen concentration that in combination with a predefined concentration of hydrogen, can create a flammable atmosphere inside the casing (2);

wherein

the nitrogen leak ($L_N$) that occurs inside the casing (2) corresponds to the difference (in volumetric flow) between the nitrogen mass flow ($m_{out}$) leaving the casing (2) and the nitrogen mass flow ($m_{in}$) entering the casing (2); and

the air leak ($L_A''$) needed to create a volumetric concentration of oxygen above the predefined oxygen volumetric concentration (Co) is determined as follows:

$$\frac{0.21 \times L_A}{Q_N} \times \frac{1}{C_O} > 1$$

.

8. The method according to any of the previous claims, wherein if the nitrogen mass flow ($m_{out}$) leaving the casing (2) is lower than the nitrogen mass flow ($m_{in}$) entering the casing (2), it is detected that the casing (2) is leaking outwards.

9. The method according to any of the previous claims, wherein if an air leak ($L_A$) is detected in the step (c), the method further comprises:

iii. stopping the operation of the hydrogen system and/or

iv. increasing the mass flow of nitrogen to be supplied inside of the casing (2).

10. Inerting system comprising:

- a casing (2) at least partially housing a hydrogen system (1) and comprising an inlet (2.1) and an outlet (2.2),
- inert gas supplying means (5) configured to supply nitrogen to the inside of the casing (2) through the inlet (2.1),
- an inlet mass meter (3) arranged at the inlet (2.1) of the casing (2) and configured to measure a nitrogen mass flow ($m_{in}$) entering the casing (2),
- an outlet mass meter (4) arranged at the outlet (2.2) of the casing (2) and configured to measure a nitrogen mass flow ($m_{out}$) leaving the casing (2); and
- control means (8) in data communication with the inlet mass meter (3) and the outlet mass meter (4);

wherein

the inerting system is provided with a predefined volumetric flow of hydrogen leak ($L_H'$) and a predefined volumetric flow of air leak ($L_A'$) at a predefined conditions of pressure (P) and temperature (T) of the hydrogen system (1); the inerting system is configured to supply to the inside of the casing (2) a nitrogen volumetric flow

$(Q_N)$ for keeping inside the casing (2) with at most a predefined hydrogen volumetric concentration $(C_H)$ and/or at most a predefined oxygen volumetric concentration (Co); and

the control means (8) are configured for detecting at least an air leak $(L_A)$ inside the casing (2) by comparing, the difference between the nitrogen mass flow $(F_{out})$ leaving the casing (2) and the nitrogen mass flow $(F_{in})$ entering the casing (2), with a first threshold; and

the first threshold is X% of the nitrogen volumetric flow $(Q_N)$, X being a predefined value provided by the performance of the inlet mass meter (3) and outlet mass meter (4).

11. The inerting system according to the previous claims, further comprising:

- inlet valve (6) configured to regulate the passage of a flow of nitrogen inside of the casing (2); and
- an outlet valve (7) configured to regulate an outlet flow of fluid located inside the casing (2) through the outlet (2.2);

wherein the control means (8) are configured to independently control the operation of the inlet valve (6) and the outlet valve (7).

12. The inerting system according to the previous claim, wherein the control means (8) are configured to control the operation of the inlet valve (6) and/or the outlet valve (7) when the difference between the nitrogen mass flow $(m_{out})$ leaving the casing (2) and the nitrogen mass flow $(m_{in})$ entering the casing (2) is greater than the first threshold.

13. The inerting system according to any of claims 10 to 12, wherein the control means (8) are also configured to detect if the casing (2) is leaking outwards when the nitrogen mass flow $(m_{out})$ leaving the casing (2) is lower than the nitrogen mass flow $(m_{in})$ entering to the casing (2).

14. The inerting system according to any of claims 10 to 13 or the method according to any of claims 1 to 9, wherein the hydrogen system (1) is a plurality of fuel cells (1.1) or a combustion engine.

15. Aircraft (9) comprising an inerting system according to any of claims 10 to 14.

FIG. 1

FIG. 2

FIG. 3

Europäisches
Patentamt

European
Patent Office

Office européen
des brevets

## EUROPEAN SEARCH REPORT

**Application Number**

EP 24 38 2428

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RU 2 628 964 C2 (AMRONA AG [CH]) 23 August 2017 (2017-08-23) * page 1, lines 20-31 * * page 6, lines 31-38; claims 1,3,5,7,12; figure 1 * ----- | 1-15 | INV. G01M3/32 A62C99/00 |

| | |
|---|---|
| | **TECHNICAL FIELDS SEARCHED (IPC)** |
| | G01M A62C |

The present search report has been drawn up for all claims

| Place of search | Date of completion of the search | Examiner |
|---|---|---|
| The Hague | 9 October 2024 | Cilissen, Marcel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

    ........................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 38 2428

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2024

| Patent document cited in search report | | Publication date | Patent family member(s) | | Publication date |
|---|---|---|---|---|---|
| RU 2628964 | C2 | 23-08-2017 | AU | 2013339724 A1 | 28-05-2015 |
| | | | BR | 112015006155 A2 | 04-07-2017 |
| | | | CA | 2883688 A1 | 08-05-2014 |
| | | | CN | 104755142 A | 01-07-2015 |
| | | | EP | 2724754 A1 | 30-04-2014 |
| | | | EP | 3141287 A1 | 15-03-2017 |
| | | | ES | 2616182 T3 | 09-06-2017 |
| | | | ES | 2932415 T3 | 18-01-2023 |
| | | | KR | 20150056834 A | 27-05-2015 |
| | | | MX | 357726 B | 20-07-2018 |
| | | | PL | 2724754 T3 | 31-07-2017 |
| | | | PL | 3141287 T3 | 20-03-2023 |
| | | | PT | 2724754 T | 20-12-2016 |
| | | | PT | 3141287 T | 05-12-2022 |
| | | | RU | 2015120323 A | 20-12-2016 |
| | | | UA | 115669 C2 | 11-12-2017 |
| | | | US | 2015323411 A1 | 12-11-2015 |
| | | | WO | 2014067694 A1 | 08-05-2014 |

EPO FORM P0459

For more details about this annex : see Official Journal of the European Patent Office, No. 12/82